# EUROPÄISCHE PATENTANMELDUNG

(11) **EP 2 647 316 A1**
(43) Veröffentlichungstag der Anmeldung: **09.10.2013**
(21) Anmeldenummer: 13162100.5
(22) Anmeldetag: 03.04.2013
(51) Int. Cl.: A47J 31/06

(54) **Filterträgeranordnung**

(30) Priorität: 05.04.2012 DE 102012205666
(71) Anmelder: BSH Bosch und Siemens Hausgeräte GmbH, 81739 München (DE)
(72) Erfinder: Nagl, Mathias, 83313 Siegsdorf (DE); Speckbacher, Sebastian, 83365 Nußdorf (DE); Stadler, Georg, 5101 Bergheim b. Salzburg (AT)

(57) **Zusammenfassung**

Die Erfindung betrifft eine Filterträgeranordnung für eine Filterkaffeemaschine mit einem Filterträger (1) und mit einer Filterträgeraufnahme (2), wobei der Filterträger (1) einen Filterträgerboden (4) mit einer ersten Öffnung (5) besitzt und in die Filterträgeraufnahme (2), die in ihrem Boden (7) eine Auslassöffnung (8) aufweist, in einer ersten Position einsetzbar ist. Die Filterträgeranordnung, wird durch mindestens eine zweite Öffnung (6) im Filterträgerboden (4) und durch mindestens eine zweite Position des Filterträgers (1) in der Filterträgeraufnahme (2) weitergebildet, in der eine der Öffnungen (5; 6) verschlossen ist. Die Erfindung betrifft außerdem eine Filterkaffeemaschine mit einer derartigen Filterträgeranordnung.

## Beschreibung

Die Erfindung betrifft eine Filterträgeranordnung für eine Filterkaffeemaschine mit einem Filterträger und mit einer Filterträgeraufnahme, wobei der Filterträger einen Filterträgerboden mit einer ersten Öffnung besitzt und in die Filterträgeraufnahme, die in ihrem Boden eine Auslassöffnung aufweist, in einer ersten Position einsetzbar ist. Die Erfindung betrifft außerdem eine Filterkaffeemaschine mit einer derartigen Filterträgeranordnung.

Aus der EP 0287781 A2 ist ein Zubereitungsgerät für Heißgetränke bekannt, das mit einem Filter ausgerüstet ist. Dieser hat einen vorzugsweise mit einer Verschlusseinrichtung versehenen Auslass. Unter dem Filter steht auf einer Aufstellfläche ein Auffangbehälter. Um das Zubereiten einer kleinen, etwa eine oder zwei Tassen umfassende Menge des heißen Getränkes, wie Kaffee, Tee oder dgl. in einem großvolumigen Filter zu ermöglichen, ist in den Filter ein Filtereinsatz einsetzbar. Er weist eine Aufnahme für eine Kleinportionspackung von Kaffeemehl oder dgl. auf. Am Boden der Aufnahme ist wenigstens ein Auslass vorgesehen, der z.B. als Saugheber ausgebildet sein kann.

Der vorliegenden Erfindung liegt die Aufgabe zugrunde, eine konstruktiv einfachere Ausführung der Filterträgeranordnung für unterschiedliche Brühmengen anzugeben.

Diese Aufgabe wird bei der eingangs genannten Filterträgeranordnung erfindungsgemäß dadurch gelöst, dass sie mindestens eine zweite Öffnung im Filterträgerboden aufweist und mindestens eine zweite Position des Filterträgers in der Filterträgeraufnahme bietet, in der zumindest eine der Öffnungen verschlossen ist. Es können auch mehrere Öffnungen verschlossen sein, sofern jedenfalls eine offen bleibt. Die Erfindung ermöglicht eine Veränderung des Brühverlaufs bei Filterkaffeemaschinen, indem eine einstellbare Veränderungsmöglichkeit des Auslaufquerschnitts des Filterträgers angeboten wird. Der Brühverlauf wird insofern geändert, als dass die Abflussgeschwindigkeit des gebrühten Kaffees und damit die Aufenthaltszeit des Brühwassers im Kaffeefilter verändert werden. Somit können Brühzeiten, Brühverlauf, Kaffeearoma, Kaffeekonzentration und Kaffeeextraktion gesteuert bzw. optimiert werden. Denn bislang sind Filterkaffeemaschinen im Normalfall auf die maximale Brühmenge angepasst. Die Erfindung wendet sich aber davon ab, für die Zubereitung kleiner Brühmengen einen speziellen Einsatz für den Filterträger oder die Filterträgeraufnahme vorzusehen, die noch dazu abweichend von der herkömmlichen Bedienung zu beschicken ist. Sie verfolgt vielmehr das Prinzip, unterschiedliche Durchflussquerschnitte mit ein und derselben Ausstattung der Filterträgeranordnung zu erzielen. Dazu kann der Filterträger in mindestens zwei voneinander verschiedenen Positionen in die Filterträgeraufnahme eingesetzt werden. Die beiden unterschiedlichen Positionen bewirken einen unterschiedlichen Gesamt-Durchflussquerschnitt des Filterträgers, der sich aus den Durchflussquerschnitten der beiden Öffnungen zusammensetzt. Der Gesamt-Durchflussquerschnitt kann variiert werden, indem der Filterträger mehr als eine Öffnung aufweist, durch die das gebrühte Kaffeegetränk auslaufen kann und die in Abhängigkeit von der gewählten Position vollständig oder z. T. geöffnet, aber jedenfalls nicht vollständig, geschlossen ist. Damit kann nicht nur ein zusätzlicher Bestandteil der Filterträgeranordnung bzw. der Filterkaffeemaschine entfallen, der vorgehalten und im Bedarfsfall korrekt eingesetzt werden muss. Vielmehr kann mit vorhandenen Mitteln derselbe Zweck erreicht werden und außerdem die gewohnte Bedienung ermöglichen, weil keine anderen Kaffeezugaben für kleine Brühmengen erforderlich sind als für große.

Die unterschiedlichen Positionen des Filterträgers bestimmen, wie viele seiner Öffnungen geschlossen sind. Die Öffnungen können beispielsweise verschlossen werden, indem der Boden des Filterträgers plan auf dem Boden der Filterträgeranordnung aufgestellt wird. Öffnungen im Filterträger, die nicht mit Öffnungen im Filterträgerboden korrespondieren, sind dadurch verschlossen. Nach einer vorteilhaften Ausgestaltung der Erfindung kann der Filterträger innerhalb der Filterträgeraufnahme mit einem gewissen Abstand zwischen dem Filterträgerboden einerseits und dem Boden der Filterträgeraufnahme andererseits gehalten werden. Der Boden der Filterträgeraufnahme kann mindestens einen aufwärtsgerichteten, also in die Filterträgeraufnahme hineinragenden Zapfen aufweisen, der mit der oder mit einer der zweiten Öffnungen bezüglich Lage und Abmessungen korrespondiert, so dass sie durch ihn verschließbar ist bzw. sind. In einer der Positionen des Filterträgers innerhalb der Filterträgeraufnahme kann also ein Zapfen in eine zweite Öffnung hineinragen und sie verschließen. In einer anderen, von der ersten abweichenden Position dagegen kann der Filterträger so eingesetzt sein, dass der Zapfen jedenfalls diese Öffnung nicht verschließt. Damit besteht zwischen den beiden Positionen ein unterschiedlicher Gesamt-Durchflussquerschnitt des Filterträgers. Ist lediglich ein Zapfen auf dem Boden der Filterträgeraufnahme angebracht, so genügt lediglich eine einzige zweite Öffnung am Filterträger, der folglich über zwei Öffnungen, nämlich die erste Öffnung und die zweite Öffnung verfügt. In einer ersten Position können beide Öffnungen unverschlossen sein, in der zweiten Position kann der Zapfen die zweite Öffnung verschließen, so dass nur noch der Durchflussquerschnitt der ersten Öffnung zur Verfügung steht. Damit sind den unterschiedlichen Positionen unterschiedliche Gesamt-Durchflussquerschnitte des Filterträgers zugeordnet. Dementsprechend können zwei Zapfen und zwei zweite Öffnungen vorgesehen sein, die insgesamt drei unterschiedliche Positionen des Filterträgers innerhalb der Filterträgeraufnahme und folglich auch drei unterschiedliche Gesamt-Durchflussquerschnitte des Filterträgers definieren können. Der Einfachheit halber soll im Folgenden von lediglich einem Zapfen und einer zweiten Öffnung die Rede sein, sofern nicht ausdrücklich mehrere erwähnt sind.

Nach einer weiteren vorteilhaften Ausgestaltung kann die Anzahl der Zapfen der Anzahl der zweiten Öffnungen im Filterträger entsprechen. Da also mit der ersten und der zweiten Öffnung zumindest eine Öffnung mehr zur Verfügung steht als Zapfen, ist immer eine durchgängige Öffnung gewährleistet. Dies schließt Fehlbedienungen aus, in denen versehentlich alle Öffnung verschlossen sein könnten, was zu einem Überlauf des Filterträgers führen könnte. Sicherheitshalber kann der Filterträger dennoch über an sich bekannte Überlauflöcher verfügen, um ein unkontrolliertes Überschwappen des Filterträgers auszuschließen.

Grundsätzlich kann die Anordnung der Zapfen und der ersten Öffnung und der zweiten Öffnung weitgehend beliebig angeordnet sein, solange sie unterschiedliche Positionen des Filterträgers mit unterschiedlichen Gesamt-Durchflussquerschnitten ermöglichen. Nach einer weiteren vorteilhaften Ausgestaltung der Erfindung kann die erste Öffnung des Filterträgers in jeder seiner Positionen koaxial zur Auslassöffnung der Filterträgeraufnahme angeordnet sein. Dadurch bietet sich nicht nur ein kurzer Fließweg zwischen der ersten Öffnung, die jedenfalls unverschlossen bleibt, und der Auslassöffnung an der Filterträgeraufnahme. Vielmehr bietet sich auch dem Benutzer eine Orientierung für das korrekte Einsetzen des Filterträgers innerhalb der Filterträgeranordnung, wenn er dieses Kriterium kennt.

Nach einer weiteren vorteilhaften Ausgestaltung der Erfindung kann der Filterträger um eine Hochachse drehbar und in mindestens zwei Positionen in die Filterträgeraufnahme einsetzbar sein, so dass mehr oder weniger zweite Öffnungen durch die Zapfen verschlossen werden. Die Hochachse kann vorteilhafterweise mit der Achse der Auslassöffnung und derjenigen der ersten Öffnung zusammenfallen. Damit bieten sich dem Benutzer mehrere Orientierungshilfen, die ihm die korrekte Bedienung der Filterträgeranordnung insbesondere dann erleichtern, wenn sie viele unterschiedliche Positionen bietet.

Gerade bei einer Vielzahl unterschiedlicher Positionen und für weniger geübte Bediener kann die korrekte Positionierung des Filterträgers innerhalb der Filterträgeraufnahme Probleme bereiten. Nach einer weiteren vorteilhaften Ausgestaltung der Erfindung kann die Filterträgeranordnung daher über miteinander korrespondierende Anlageflächen am Filterträger einerseits und an der Filterträgeraufnahme andererseits verfügen, die die erste Position und mindestens eine zweite Position des Filterträgers in der Filterträgeraufnahme definieren. Die Anlageflächen können an beliebigen Orten am Mantel des Filterträgers angebracht sein. Eine leicht nachvollziehbare Möglichkeit kann darin bestehen, dass der Filterträger der Form einer einzusetzenden Papier-Filtertüte gemäß der EP 1 236 426 A1 entspricht. Diese charakteristische, abgeflachte Trichterform kann auch die Innenseite der Filterträgeraufnahme aufweisen, so dass der Filterträger in lediglich zwei unterschiedlichen Positionen eingesetzt werden kann, die sich um eine Drehung um seine Hochachse um 180° unterscheiden. In der einen Position können alle Öffnungen freigegeben sein, in der anderen lediglich eine durch den Zapfen verschlossen. Ist der Filterträger in dieser an sich bekannten Art geformt und sollen mehr als nur zwei, beispielsweise vier Positionen definiert werden können, so kann die Filterträgeraufnahme eine an sich zylindrische Form und in ihrem Innern eine kreuzartige Struktur aufweisen, die den Einsatz des Filterträgers in vier unterschiedlichen Positionen ermöglicht.

Alternative Anlageflächen können an einem oberen Umfang des Filterträgers bzw. der Filterträgeraufnahme angeordnet sein, wenn der Filterträger an einer oberseitigen, regelmäßig kreisrunden Aufnahmeöffnung bzw. mit seinem dortigen Rand entlang seines Umfangs in der Filterträgeraufnahme eingehängt wird. Über Rasten und Nuten lassen sich dort nahezu beliebig viele unterschiedliche Positionen definieren, die zudem auf einer außenseitigen Mantelfläche der Filterträgeraufnahme durch Symbole optisch voneinander unterschieden werden können. Dadurch kann die Bedienung der Filterkaffeemaschine, insbesondere bei einer Vielzahl unterschiedlicher Positionen, erheblich vereinfacht werden.

Erfindungsgemäß kann der Gesamt-Durchflussquerschnitt des Filterträgers über wahlweises Öffnen oder Verschließen der zweiten Öffnungen nur in bestimmten Stufen verändert werden. Nach einer weiteren vorteilhaften Ausgestaltung der Erfindung kann die Filterträgeranordnung zusätzlich über einen insbesondere von außen zugänglichen Verstellmechanismus zur Verstellung des Querschnitts der ersten Öffnung verfügen. Die Positionen des Filterträgers innerhalb der Filterträgeraufnahme können dann eine Grobeinstellung darstellen, die sich mit Hilfe des Verstellmechanismus zusätzlich fein justieren lässt. Damit kann die Brühmenge beispielsweise auf unterschiedliche Tassengrößen angepasst und ggf. für mehrere Bedienungen dauerhaft eingestellt werden, wenn beispielsweise in einem Haushalt nur Tassen dieser Größe, aber häufiger unterschiedliche Anzahlen an Tassenmengen auf einmal gebrüht werden sollen. Ist der Verstellmechanismus nicht nur bei der Entnahme des Filterträgers auf der Filterträgeraufnahme, sondern auch bei eingesetztem Filterträger bedienbar, so lässt er sich bei einem Wechsel des Getränkegefäßes schneller daran anpassen.

Nach einer weiteren vorteilhaften Ausgestaltung der Erfindung kann die Filterträgeranordnung über eine Mechanik verfügen, die beispielsweise beim Ausschwenken der Filterträgeraufnahme zur Entnahme des Filterträgers den Verstellmechanismus auf einen Standardwert zurücksetzt. Damit kann insbesondere bei häufigem Getränkegefäßwechsel das Erfordernis der Justierung im Bewusstsein des Benutzers gehalten werden und ggf. Fehlbefüllung infolge einer vergessenen Anpassung vermieden werden.

Die eingangs genannte Aufgabe wird außerdem durch eine Filterkaffeemaschine gelöst, die eine Filterträgeranordnung in einer der oben genannten Ausführungsformen umfasst.

Das Prinzip der Erfindung wird im Folgenden anhand einer Zeichnung beispielshalber noch näher erläutert. In der Zeichnung zeigen:
- Figur 1:: den erfindungsgemäßen Filterträger,
- Figur 2:: die erfindungsgemäße Filterträgeranordnung mit der Filterträgeraufnahme mit dem Filterträger im Querschnitt und
- Figur 3:: die Filterträgeraufnahme in der Draufsicht.

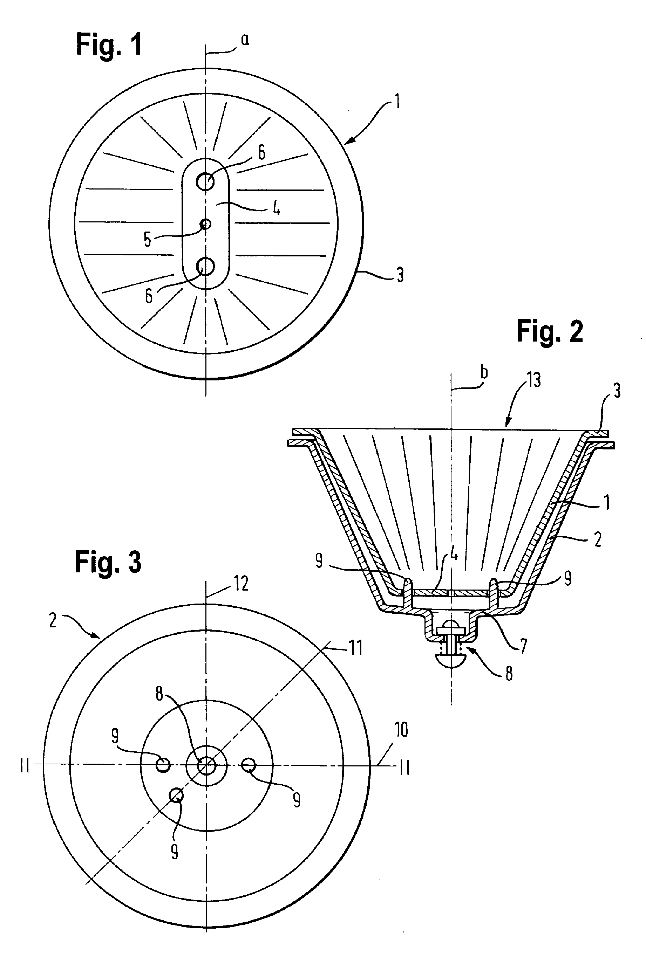

Der erfindungsgemäße Filterträger 1 entsprechend Figur 1 ist in der üblichen Weise geformt. Sein oberer kreisförmig umlaufender Rand 3 umgibt eine Aufnahmeöffnung 20 für Brühwasser und dient als Aufhängung des Filterträgers 1 in einer Filterträgeraufnahme (s. Figur 2). Von seinem Rand 3 aus läuft der Filterträger 1 nach unten konisch in einen langgestreckten oval-förmigen Filterträgerboden 4 mit einer Längsachse a aus, der weitgehend parallel zu und mit einem gewissen Abstand gegenüber einem Boden 7 der Filterträgeraufnahme 2 (s. Figur 2) positionierbar ist. Im Filterträgerboden 4 ist in weitgehend bekannter Weise eine erste, kleinere Öffnung 5 mittig und axial mit der Aufnahmeöffnung 13 für den Auslauf des Brühgetränks angebracht. Zusätzlich umfasst der erfindungsgemäße Filterträger 1 beidseits der ersten Öffnung 5 zwei zweite, größere Öffnungen 6. Sie sitzen im selben Abstand symmetrisch zur ersten Öffnung 5 und ebenfalls auf der Längsachse a des Filterträgerbodens 4.

Figur 2 zeigt die erfindungsgemäße Filterträgeranordnung mit der Filterträgeraufnahme 2 und dem darin eingesetzten Filterträger 1 im Querschnitt. Die Filterträgeraufnahme 2 ist annähernd umgekehrt kegelstumpfförmig geformt und mit einem kreisförmigen Boden 7 versehen. Auf dem Boden 7 befindet sich mittig und koaxial zur ersten Öffnung 5 des eingesetzten Filterträgers 1 eine Auslassöffnung 8 mit einem federbelasteten Ventil für das Brühgetränk. Neben der Auslassöffnung 8 sind Zapfen 9 angeordnet, die einen Abstand dazu aufweisen, der demjenigen der zweiten Öffnungen 6 von der ersten Öffnung 5 entspricht. Sie weisen in die Richtung des eingesetzten Filterträgers 1 und korrespondieren mit dessen zweiten Öffnungen 6.

Die Zapfen 9 durchdringen die zweiten Öffnungen 6 des Filterträgers 1 und verschließen sie weitgehend. Damit steht nur noch die erste Öffnung 5 als Auslauf für ein Brühgetränk zur Verfügung, so dass dessen Abflussgeschwindigkeit relativ gering ist. Damit kann eine längere Aufenthaltsdauer des Brühwassers im Filterträger 1 erreicht werden, als wenn eine oder beide zweite Öffnungen 6 geöffnet wären.

Der Filterträger 1 ist in Figur 2 in einer ersten Position 10 dargestellt, in der er eine geringe Abflussgeschwindigkeit ermöglicht. Er kann durch Drehen um seine Hochachse b in zwei weiteren Positionen 11, 12 in die Filterträgeraufnahme 2 eingesetzt werden, die in Figur 3 zu erkennen sind. Sie zeigt die Filterträgeraufnahme 2 in einer Draufsicht. Im Boden 7 ist axial die Auslassöffnung 8 zu erkennen, neben der beidseits auf der Schnittachse II - II die Zapfen 9 (vgl. Figur 2) angeordnet sind. Ein dritter Zapfen 9 mit identischen Abmessungen befindet sich im selben radialen Abstand von der Auslassöffnung 8, aber unterhalb der Schnittachse II - II.

Insbesondere aus dieser Anordnung der Zapfen 9 ergeben sich die drei Positionen 10, 11, 12 des Filterträgers 1 in der Filteraufnahme 2, denen jeweils ein anderer Abflussquerschnitt zugeordnet ist: Je nach gewählter Position, in der sich der Filterträger 1 relativ zur Filterträgeraufnahme 2 befindet, werden mehr oder weniger Öffnungen 6 durch die Zapfen 9 verschlossen. Die Position 10 ist in Figur 2 dargestellt und erläutert. Sie entspricht dem geringsten Durchfluss, für z.B. geringe Brühmengen von 3 bis 4 Tassen, weil nur die erste Öffnung 5 einen Auslauf für Brühgetränk bietet.

Durch das Schließen nur einer der zweiten Öffnungen 6 mit einem Zapfen 9 ist die Position 11 erreicht, was etwa der halben Brühmenge entspricht. Fluchtet die Längsachse a des Filterträgers 1 mit nur einem Zapfen 9 und der Auslassöffnung 8, ragt nur ein Zapfen 9 in eine zweite Öffnung 6, während die gegenüberliegende zweite Öffnung 6 mangels Zapfen 9 unverschlossen bleibt. Damit stehen eine zweite Öffnung 6 und die stets unverschlossene Öffnung 5 zum Auslauf des Brühgetränks zur Verfügung. Wegen der konischen Außenform des Filterträgers 1, der trichterförmig in den Filterträgerboden 4 ausläuft, passt er in der Position 11 schräg zwischen die beiden Zapen 9 auf der Schnittlinie II - II.

In einer letzten Position 12 des Filterträgers 1 nimmt er eine weitgehend beliebige Stellung jenseits der Position 10 oder 11 ein. Jetzt sind alle Öffnungen 5, 6 frei. Dies entspricht dem größten Durchfluss, für z.B. eine volle Brühmenge von 10 Tassen.

Dadurch wird im Bereich zwischen Beginn des Auslaufs am Filterträger 1 und des untersten Abtropfpunktes der Filterträgeranordnung eine Möglichkeit geschaffen, den Querschnitt des Auslaufkanals zu verstellen und die Durchflussgeschwindigkeit des gebrühten Kaffees zu verändern. Für geringe Brühmengen kann so die Abflussgeschwindigkeit und damit eine längere Aufenthaltsdauer des Brühwassers im Filterträger beeinflusst werden, um die gewünschte Extraktionszeit zu erreichen. Bei jeder Brühmenge kann folglich die Extraktionszeit und so den Geschmack verändert werden.

Da es sich bei der vorhergehend detailliert beschriebenen Filterträgeranordnung um ein Ausführungsbeispiel handelt, kann es in üblicher Weise vom Fachmann in einem weiten Umfang modifiziert werden, ohne den Bereich der Erfindung zu verlassen. Insbesondere kann die konkrete Ausgestaltung der äußeren Form der Filterträgeranordnung in anderer Weise als in der hier beschriebenen folgen. Ebenso kann der Verschließmechanismus der zweiten Öffnungen in einer anderen Form ausgestaltet werden, wenn dies aus Platzgründen bzw. designerischen Gründen notwendig ist. Außerdem schließt die Verwendung der unbestimmten Artikel "ein" bzw. "eine" nicht aus, dass die betreffenden Merkmale auch mehrfach vorhanden sein können.

### Bezugszeichenliste

| | |
|---|---|
| 1 | Filterträger |
| 2 | Filterträgeraufnahme |
| 3 | oberer Rand des Filterträgers 1 |
| 4 | Filterträgerboden |
| 5 | erste Öffnung |
| 6 | zweite Öffnungen |
| 7 | Boden der Filterträgeraufnahme 2 |
| 8 | Auslassöffnung |
| 9 | Zapfen |
| 10 | erste Position des Filterträgers 1 |
| 11 | zweite Position des Filterträgers 1 |
| 12 | dritte Position des Filterträgers 1 |
| 13 | Aufnahmeöffnung |
| | |
| a | Längsachse des Filterträgerbodens 4 |
| b | Hochachse des Filterträger 1 |

## Patentansprüche

1. Filterträgeranordnung für eine Filterkaffeemaschine mit einem Filterträger (1) und mit einer Filterträgeraufnahme (2), wobei der Filterträger (1) einen Filterträgerboden (4) mit einer ersten Öffnung (5) besitzt und in die Filterträgeraufnahme (2), die in ihrem Boden (7) eine Auslassöffnung (8) aufweist, in einer ersten Position einsetzbar ist, **gekennzeichnet durch** mindestens eine zweite Öffnung (6) im Filterträgerboden (4) und **durch** mindestens eine zweite Position des Filterträgers (1) in der Filterträgeraufnahme (2), in der eine der Öffnungen (5; 6) verschlossen ist.

2. Filterträgeranordnung nach Anspruch 1, **gekennzeichnet durch** mindestens einen aufwärts gerichteten Zapfen (9) am Boden (7) der Filterträgeraufnahme (2), **durch** den die zweite Öffnung (6) verschließbar ist.

3. Filterträgeranordnung nach Anspruch 1 oder 2, **dadurch gekennzeichnet, dass** die Anzahl der Zapfen (9) der Anzahl der zweiten Öffnungen (6) im Filterträger (1) entspricht.

4. Filterträgeranordnung nach einem der obigen Ansprüche, **gekennzeichnet durch** eine Anordnung der ersten Öffnung (5) koaxial zur Auslassöffnung (8).

5. Filterträgeranordnung nach Anspruch 4, **dadurch gekennzeichnet, dass** der Filterträger (1) um eine Hochachse drehbar und in mindestens zwei Positionen in die Filterträgeraufnahme (2) einsetzbar ist.

6. Filterträgeranordnung nach einem der obigen Ansprüche, **gekennzeichnet durch** miteinander korrespondierende Anlageflächen am Filterträger (1) einerseits und an der Filterträgeraufnahme (2) andererseits, die die ersten Position und mindestens eine zweite Position des Filterträgers (1) in der Filterträgeraufnahme (2) definieren.

7. Filterträgeranordnung nach einem der obigen Ansprüche, **gekennzeichnet durch** einen insbesondere von außen zugänglichen Verstellmechanismus zur Verstellung des Querschnitts der ersten Öffnung (5).

8. Filterträgeranordnung nach dem obigen Anspruch **dadurch gekennzeichnet, dass** beim Ausschwenken des Filterträgers (1) der Querschnitt auf einen Standardwert zurückgestellt wird.

9. Filterkaffeemaschine mit einer Filterträgeranordnung nach einem der obigen Ansprüche.
